# EUROPEAN PATENT APPLICATION

(11) **EP 4 734 194 A1**
(43) Date of publication of application: **29.04.2026**
(21) Application number: 24825722.2
(22) Date of filing: 05.06.2024
(51) Int. Cl.: H01M 8/04, H01M 8/00, H01M 8/04746

(54) **FUEL CELL EVALUATION SYSTEM, INCLINATION TEST DEVICE, FUEL CELL EVALUATION METHOD, AND PROGRAM FOR FUEL CELL EVALUATION SYSTEM**

(30) Priority: 21.06.2023 JP 2023101421
(71) Applicant: HORIBA, Ltd., Kyoto-shi Kyoto 601-8510 (JP)
(72) Inventor: MIZUTAKA, Toshio, Kyoto-shi, Kyoto 601-8510 (JP); TABATA, Kunio, Kyoto-shi, Kyoto 601-8510 (JP); KOMADA, Mineyuki, Kyoto-shi, Kyoto 601-8510 (JP)
(74) Representative: Müller Hoffmann & Partner
(86) International application number: PCT/JP2024/020546
(87) International publication number: WO 2024/262315

(57) **Abstract**

A fuel cell evaluation system evaluates a test piece that is a fuel cell to be mounted on a mobile object or a portion of the fuel cell, and includes: a hydrogen gas supply line that supplies hydrogen gas to the test piece; an electric discharge unit that controls an electric discharge load of the test piece; and an inclination test device that has a mounting base on which the test piece is mounted, and inclines the mounting base so as to change the attitude of the test piece depending on the moving state of the mobile object.

## Description

### Technical Field

The present invention relates to a fuel cell evaluation system that evaluates a fuel cell, an inclination test device, a fuel cell evaluation method, and a program for the fuel cell evaluation system.

### Background Art

Conventionally, in a fuel cell evaluation system that evaluates power generating performance of a fuel cell mounted on a vehicle, the fuel cell is evaluated while in a fixed state (Patent Literature 1, for example). However, in an actual use situation where a fuel cell is mounted on a mobile object such as a vehicle, the fuel cell is inclined depending on the moving state of the mobile object. In this case, hydrogen and oxygen chemically react with each other at the time of power generation, and water is generated in the fuel cell. Therefore, it is considered that water (also referred to as condensed water) to be discharged from a discharge port flows backward due to inclination of the fuel cell, and affects the power generating performance and the like of the fuel cell. Conventionally, any method for evaluating power generating performance by taking into account the influence of condensed water due to inclination of the fuel cell has not been considered.

### Citation List

### Patent Literature

Patent Literature 1: JP 2010-021096 A

### Summary of Invention

### Technical Problem

The present invention has been made in view of the above problem, and a principal object thereof is to enable fuel cell evaluation taking into consideration the influence of condensed water generated by power generation.

### Solution to Problem

Specifically, a fuel cell evaluation system according to the present invention evaluates a test piece that is a fuel cell to be mounted on a mobile object or a portion of the fuel cell, and includes: a hydrogen gas supply line that supplies hydrogen gas to the test piece; an electric discharge unit that controls an electric discharge load of the test piece; and an inclination test device that has a mounting base on which the test piece is mounted, and inclines the mounting base so as to change the attitude of the test piece depending on the moving state of the mobile object.

With such a configuration, the inclination test device can incline the fuel cell, which is the test piece, by changing its attitude depending on the moving state of the mobile object (in other words, by simulating a state in which the fuel cell is mounted on the mobile object). Accordingly, fuel cell evaluation can be performed by taking into consideration the influence of the condensed water generated by power generation, such as the condensed water generated by power generation and flowing backward without being correctly drained, for example. Note that the inclination test device may reproduce a predetermined inclination or an inclination set by the user, to reproduce the moving state of the mobile object.

Specific modes of the moving state include one or more states selected from among a state in which the mobile object is accelerating, a state in which the mobile object is decelerating, a state in which the mobile object is moving at a constant speed, a state in which the mobile object is at a stop, and a state in which the mobile object is moving on an inclined surface.

Also, in the fuel cell evaluation system, the electric discharge unit preferably changes the electric discharge load of the test piece depending on the moving state of the mobile object, and the hydrogen gas supply line preferably changes the amount of the hydrogen gas to be supplied to the test piece, depending on the moving state of the mobile object.

In this manner, a state in which the fuel cell is mounted on the mobile object can be more accurately simulated, and evaluation of power generating performance and the like can be more accurately performed.

Also, in the fuel cell evaluation system, the hydrogen gas supply line is preferably provided so as to extend through the vicinity of a fulcrum portion that is the fulcrum of inclination of the mounting base in the inclination test device, and the portion extending through the vicinity of the fulcrum portion among the pipes constituting the line is preferably formed with a pipe made from a stretchable material.

In this manner, in the inclination test device, the hydrogen gas supply line is provided so as to extend through the vicinity of the fulcrum portion that is the center of rotational motion of the mounting base, which is the vicinity of the portion in which displacement is small even when the mounting base is inclined. Thus, the movement of the hydrogen gas supply line can be reduced when the mounting base moves, the fluctuation in the amount of supply of the hydrogen gas to the fuel cell can be reduced, and evaluation of power generating performance and the like can be more accurately performed.

A specific mode of the fuel cell evaluation system preferably further includes: a discharge line that is connected to a discharge port of the test piece, and discharges condensed water generated by power generation to the outside. The discharge line is preferably provided so as to extend through the vicinity of a fulcrum portion that is the fulcrum of inclination of the mounting base in the inclination test device, and the portion extending through the vicinity of the fulcrum portion among the pipes constituting the line is preferably formed with a pipe made from a stretchable material.

In this manner, in the inclination test device, the discharge line is provided so as to extend through the vicinity of the fulcrum portion in which displacement is small even when the mounting base is inclined, and the portion passing through the vicinity of the fulcrum portion is formed with a pipe made from stretchable material, so that movement of the discharge line when the mounting base moves can be reduced, and evaluation of power generating performance and the like can be more accurately performed.

A specific mode of the fuel cell evaluation system further includes a test result storage unit that stores the amount of supply of the hydrogen gas to be supplied to the test piece, the amount of power generated by the test piece, and the attitude of the test piece, which are associated with one another.

The fuel cell evaluation system preferably further includes a simulation device that simulates the moving state of the mobile object, using a moving environment model that models a moving environment of the mobile object, a driving mode model that models a driving mode, and/or a mobile object model that models the mobile object. The inclination test device inclines the mounting base so as to reproduce the moving state of the mobile object simulated by the simulation device.

In this manner, the inclination test device can realistically reproduce a use situation in which the fuel cell is actually mounted on the mobile object, and thus, fuel cell evaluation taking into consideration the influence of the condensed water generated by power generation can be more accurately performed.

Further, an inclination test device according to the present invention is an inclination test device that tests a test piece that is a fuel cell to be mounted on a mobile object or a portion of the fuel cell. The inclination test device includes: a mounting base on which the test piece is mounted; and an attitude control unit that inclines the mounting base so as to change the attitude of the test piece depending on the moving state of the mobile object.

Furthermore, a fuel cell evaluation method according to the present invention is a method for evaluating a test piece that is a fuel cell to be mounted on a mobile object or a portion of the fuel cell, the method including: supplying hydrogen gas to the test piece; controlling an electric discharge load of the test piece; and mounting the test piece on a mounting base, and inclining the mounting base so as to change the attitude of the test piece depending on the moving state of the mobile object.

A program for a fuel cell evaluation system according to the present invention is a program for a fuel cell evaluation system that evaluates a test piece that is a fuel cell to be mounted on a mobile object or a portion of the fuel cell, the fuel cell evaluation system including: a hydrogen gas supply line that supplies hydrogen gas to the test piece; an electric discharge unit that controls an electric discharge load of the test piece; and an inclination test device including a mounting base on which the test piece is mounted. The program causes a computer to execute a function as an attitude control unit that inclines the mounting base so as to change the attitude of the test piece depending on the moving state of the mobile object.

Such an inclination test device, such a fuel cell evaluation method, and such a program for a fuel cell evaluation system can achieve the same actions and effects as those of the fuel cell evaluation system according to the present invention.

### Advantageous Effects of Invention

According to the present invention designed as described above, it is possible to perform fuel cell evaluation taking into consideration the influence of the condensed water generated by power generation, by changing the attitude of the fuel cell depending on the moving state of the mobile object.

### Brief Description of Drawings

FIG. 1 is a diagram schematically illustrating an overall configuration of a fuel cell evaluation system according to the present embodiment.
FIG. 2 is a functional block diagram of a control device according to the embodiment.
FIG. 3 is a diagram schematically illustrating an overall configuration of a fuel cell evaluation system according to another embodiment.
FIG. 4 is a functional block diagram of a control device according to another embodiment.

### Description of Embodiments

The following is a description of a fuel cell evaluation system 100 according to an embodiment of the present invention, with reference to the drawings.

The fuel cell evaluation system 100 of the present embodiment performs an evaluation test in a test chamber to evaluate the performance of a fuel cell to be mounted on a vehicle that is a mobile object. More specifically, the fuel cell evaluation system 100 inclines a test piece S that is a fuel cell or a portion of the fuel cell depending on the moving state (specifically, the running state) of a vehicle, and simulates a state of being mounted on the vehicle, to perform an evaluation test on the battery performance.

The fuel cell S as the test piece includes a fuel cell stack in which a plurality of unit cells each including a solid electrolyte, an air electrode (cathode), and a fuel electrode (anode) are stacked, for example. In the test piece, the housing that accommodates the fuel cell stack has a hydrogen intake port for taking hydrogen gas as fuel into the fuel electrode, an oxygen intake port for taking gas containing oxygen (air, for example) into the air electrode, and a discharge port for discharging water (condensed water) generated by power generation. Note that the fuel cell S is not necessarily a fuel cell stack, but may be a unit cell. That is, the test piece may be the fuel cell S or a portion thereof. Also, the fuel cell S may be a fuel cell system including the fuel cell stack and its auxiliary components. Examples of the auxiliary components include, but are not limited to, a hydrogen gas pump and a valve, an air pump and a valve, a compressor, an intercooler, a humidifier, a radiator, and/or a control system ECU.

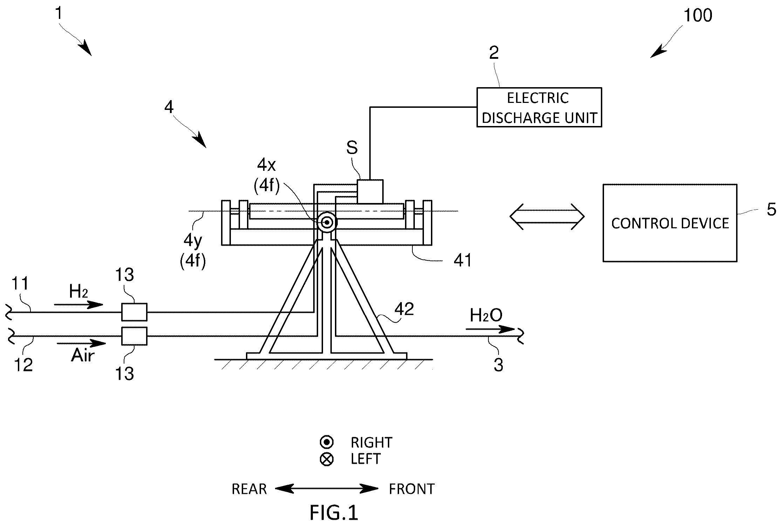

Specifically, as illustrated in FIG. 1, the fuel cell evaluation system 100 includes a power-generating gas supply system 1 that supplies a power-generating gas to the test piece, an electric discharge unit 2 that controls an electric discharge load of the test piece, an inclination test device 4 that inclines the test piece depending on the running state of the vehicle, and a control device 5.

The power-generating gas supply system 1 includes a hydrogen gas supply line 11 for supplying hydrogen gas to the fuel electrode of the test piece. The upstream end of the hydrogen gas supply line 11 is connected to a hydrogen gas source such as a gas cylinder, and the downstream end thereof is supplied to the hydrogen intake port.

The power-generating gas supply system 1 of the present embodiment further includes an oxygen-containing gas supply line 12 that supplies an oxygen-containing gas (specifically, air) to the air electrode of the test piece. The upstream end of the oxygen-containing gas supply line 12 is connected to an oxygen-containing gas source such as a gas cylinder, and the downstream end thereof is supplied to the oxygen intake port.

The hydrogen gas supply line 11 and the oxygen-containing gas supply line 12 each have a flow rate controller 13 that controls the flow rate of the gas flowing through each line. The flow rate controller 13 includes a mass flow controller, a flow rate control valve, or the like, for example, and is designed to adjust the gas flowing through the line to a predetermined flow rate, in accordance with a control signal that is output from the control device 5.

The power-generating gas supply system 1 of the present embodiment may further include a humidifying mechanism (not shown) that humidifies the hydrogen gas or the oxygen-containing gas to be supplied to the test piece. As the humidifying mechanism, any desired type such as a bubbler type, an injection type, a shower type, or a shunt type may be used, for example.

The fuel cell evaluation system 100 of the present embodiment further includes a discharge line 3 for discharging the condensed water generated by the power generation by the test piece to the outside. The upstream end of the discharge line 3 is connected to the discharge port of the test piece, and the downstream end thereof is connected to a discharge tank, a discharged water drain, or the like.

The electric discharge unit 2 controls the electric discharge load of the test piece, and includes an electronic load device including a constant-current control circuit, for example. The electronic load device executes a function as a load that consumes electric energy generated by the test piece. As the electric discharge unit 2 controls the electric discharge load of the test piece, it is possible to perform performance evaluation simulating a use situation in which a load is connected to the test piece.

The inclination test device 4 is a device (a so-called inclining bench) capable of inclining the mounted test piece at any desired angle. The inclination test device 4 can simulate the influence of the gradient and inclination of the actual road and/or the acceleration during running (during acceleration or deceleration) of the vehicle. The inclination test device 4 includes a mounting base 41 on which the test piece is mounted, support legs 42 that rotatably (inclinably) support the mounting base 41, and a drive mechanism (not shown) that rotates the mounting base 41.

In the inclination test device 4, as illustrated in FIG. 1, the longitudinal direction and the lateral direction are set so as to correspond to the longitudinal direction and the lateral direction of the vehicle, respectively. In the inclination test device 4, a first rotation axis 4x parallel to the lateral direction, and a second rotation axis 4y parallel to the longitudinal direction are set, and the mounting base 41 is designed to be independently rotatable about the respective rotation axes 4x and 4y with respect to the longitudinal direction and the lateral direction. More specifically, the mounting base 41 can incline at a predetermined angle (-60° to +60°, for example) with respect to the longitudinal direction by rotating about the first rotation axis 4x, and can incline at a predetermined angle (-60° to +60°, for example) with respect to the lateral direction by rotating about the second rotation axis 4y.

At least one (all, in this example) of the hydrogen gas supply line 11, the oxygen-containing gas supply line 12, and the discharge line 3 is provided so as to extend through the vicinity of a fulcrum portion 4f that serves as the fulcrum of inclination (which is the center of rotational motion) of the mounting base 41 in the inclination test device 4. More specifically, at least one (all, in this example) of the hydrogen gas supply line 11, the oxygen-containing gas supply line 12, and the discharge line 3 is set so as to extend through the vicinity of at least one (both, in this example) of the first rotation axis 4x and the second rotation axis 4y that are set in the inclination test device 4. The vicinity of the fulcrum portion 4f is within a predetermined range from the center of rotational motion, and refers to a portion within a range in which movement in the longitudinal direction and/or the lateral direction is small. The predetermined range is within a range of a radius of 1.5 meters, 1 meter, or 0.5 meters from the center of rotation, for example.

In the present embodiment, of one or both of the hydrogen gas supply line 11 and the oxygen-containing gas supply line 12, at least the pipe extending through the vicinity of the fulcrum portion 4f among the pipes constituting the line may be formed with a flexible pipe such as a flexible gas hose. Also, of the discharge line 3, at least the pipe extending through the vicinity of the fulcrum portion 4f among the pipes constituting the line may be formed with a pipe made from a flexible and stretchable material. Further, of the hydrogen gas supply line 11, the oxygen-containing gas supply line 12, and the discharge line 3, the pipes other than those near the fulcrum portion 4f among the pipes constituting the lines may be formed with any type of pipe, may be formed with flexible pipes, or may be formed with non-flexible pipes.

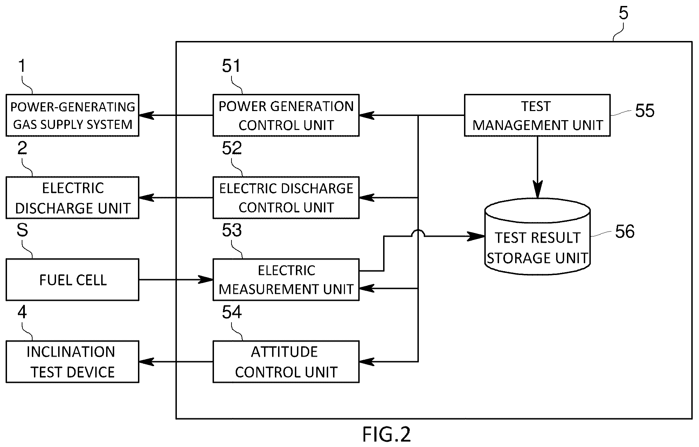

The control device 5 is for controlling the attitude of the fuel cell S serving as the test piece. Specifically, the control device 5 is a dedicated or general-purpose computer including a CPU, an internal memory, an input/output interface, an A/D converter, and the like, and executes at least a function as an attitude control unit 54 as illustrated in FIG. 2, as the CPU and peripheral devices cooperate on the basis of a predetermined program stored in the internal memory.

The attitude control unit 54 controls the attitude of the fuel cell S by outputting a control signal to the drive mechanism of the inclination test device 4 and controlling rotational motion of the mounting base 41. Specifically, the attitude control unit 54 outputs, to the drive mechanism, a control signal including information regarding the angles of inclination with respect to both the longitudinal direction and the lateral direction, to rotate the mounting base 41. Thus, the fuel cell S can be inclined so as to correspond to the running state of the vehicle (specifically, the attitude of the running vehicle). Note that the attitude control unit 54 may be included in the inclination test device 4.

Also, the control device 5 of the present embodiment may control the power generating operation of the fuel cell S, and may be designed to further execute functions as a power generation control unit 51, an electric discharge control unit 52, an electric measurement unit 53, and/or a test management unit 55.

The power generation control unit 51 controls the power-generating gas supply system 1, to control the power generating operation of the fuel cell S serving as the test piece. Specifically, the power generation control unit 51 transmits a control signal to each flow rate controller 13 provided in the hydrogen gas supply line 11 and/or the oxygen-containing gas supply line 12, controls the flow rate of the power-generating gas (the hydrogen gas and/or the oxygen-containing gas) supplied to the air electrode and/or the fuel electrode of the fuel cell S, and controls the amount of power generated by the fuel cell S.

The electric discharge control unit 52 transmits a control signal to the electronic load device included in the electric discharge unit 2, to control the load to be applied to the fuel cell S.

The electric measurement unit 53 acquires a measurement signal from an electric measurement device (not shown) such as an impedance analyzer or a cell voltage monitor connected to the fuel cell S, and measures electric characteristics such as the amount of generated power, the resistance, the current, or the voltage of the fuel cell S.

The test management unit 55 controls the functions of the respective components of the control device 5, and manages the evaluation test. Also, the test management unit 55 may manage the schedule of the evaluation test. Specifically, the test management unit 55 stores any test schedule that is set by an operator's input. The test schedule includes the timings of operations of the power generation control unit 51, the electric discharge control unit 52, the electric measurement unit 53, and the attitude control unit 54, the amount of control (the amounts of supply of the hydrogen gas and the oxygen-containing gas, for example) by the power generation control unit 51, the amount of control (the magnitude of the load to be applied to the fuel cell S, for example) by the electric discharge control unit 52, the running state of the vehicle, the amount of control (the angle of inclination of the mounting base 41, for example) by the attitude control unit 54, and the like. That is, the test management unit 55 also functions as a storage unit that stores the running state of the vehicle and the respective amounts of control depending on the running state. In the fuel cell evaluation system 100 of the present embodiment, the test schedule is set so that the attitude (the angle of inclination) of the fuel cell S is variously changed, the amount of supply of the power-generating gas and the amount of load for the fuel cell S are changed in each changed attitude, and the amount of power generated by the fuel cell S is measured under various conditions. Further, information regarding the attitude of the fuel cell S, information regarding the amount of supply of the power-generating gas (specifically, the hydrogen gas and the oxygen-containing gas) in each attitude, and information regarding the amount of power generated by the fuel cell S in each attitude are associated with one another and are stored into a test result storage unit 56. Note that the evaluation test may be performed while the attitude is not variously changed but is fixed at a set predetermined inclination angle.

Note that the function as the attitude control unit 54 and the functions as the power generation control unit 51, the electric discharge control unit 52, the electric measurement unit 53, and the test management unit 55 may be executed by a single control device 5, or may be executed by a plurality of control devices 5 that are separated from each other. Also, the respective functions as the attitude control unit 54, the power generation control unit 51, the electric discharge control unit 52, the electric measurement unit 53, and the test management unit 55 may be executed by control devices 5 that are different from each other.

With the test system of the present embodiment designed as described above, the inclination test device 4 can incline the fuel cell S, which is a test piece, by simulating a running state of a vehicle and changing its attitude. Accordingly, fuel cell evaluation can be performed by taking into consideration the influence of the condensed water generated by power generation, such as the condensed water generated by power generation and flowing backward without being correctly drained, for example.

Furthermore, the hydrogen gas supply line 11, the oxygen-containing gas supply line 12, or the discharge line 3 is provided so as to extend through the vicinity of the fulcrum portion 4f of inclination of the mounting base 41 in the inclination test device 4. Thus, the movement of each line when the mounting base 41 moves can be reduced, and evaluation on power generation performance and the like can be more accurately performed.

Note that the present invention is not limited to the above embodiment.

For example, a fuel cell evaluation system 100 may reproduce a predetermined inclination or an inclination set by the user, to reproduce a moving state of a mobile object.

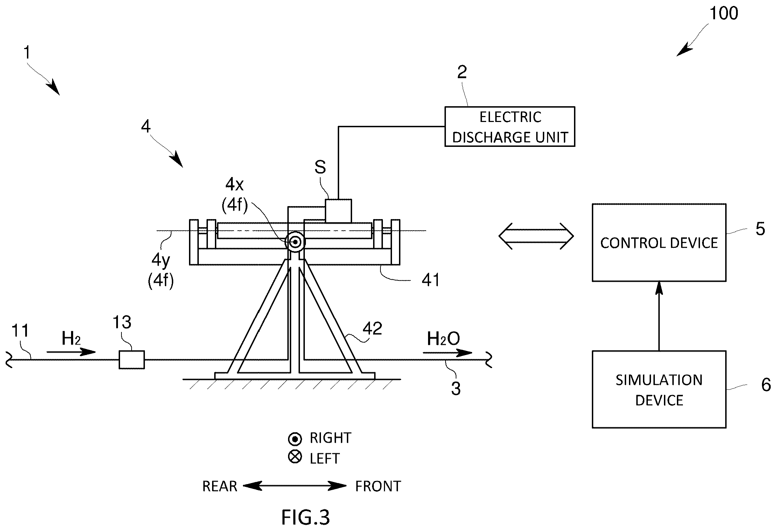

Also, as illustrated in FIG. 3, a fuel cell evaluation system 100 according to another embodiment may further include a simulation device 6 that simulates a running state of a vehicle running on a road, for example. In this case, the control device 5 may cause the power generation control unit 51, the electric discharge control unit 52, and the attitude control unit 54 to operate so as to reproduce the moving state of the vehicle simulated by the simulation device 6. In the following, a mode including the simulation device 6 is described.

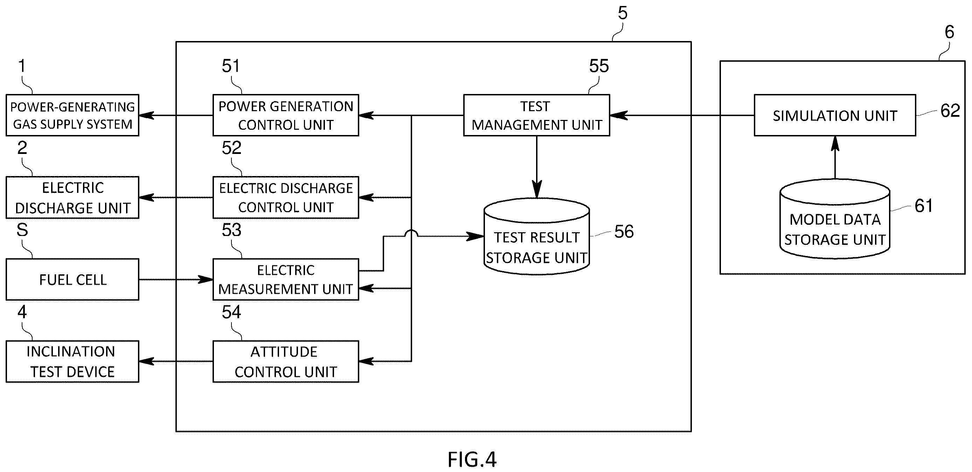

The simulation device 6 simulates a vehicle running on a road, using a moving environment model that models a moving environment (specifically, a running environment), a driving mode model (a driver model) that models a driving mode, and a vehicle model that models an actual vehicle, and is a computer including a CPU, an internal memory, an input/output interface, an input means such as a keyboard, an output means such as a display, a communication means, and the like. As illustrated in FIG. 4, the simulation device 6 executes functions as a model data storage unit 61 that stores each model, and a simulation unit 62 that simulates a running state of a vehicle on the basis of each stored model.

The moving environment model is a model that quantifies a running route, the road surface resistance of the running route, road signs, temperature, humidity, the altitude of the running route, the degree of traffic congestion (traffic volume) of the running route, or the like, for example.

The driving mode model is a model that quantifies dynamics, energy efficiency, or nervousness, for example.

The vehicle model is obtained by modeling vehicle information such as the type of an actual vehicle (truck, passenger car, or the like), the weight, the transmission type (AT, CVT, or the like), the tire diameter, a transmission gear ratio, engine characteristics (the throttle opening degree, the relationship between the rotation speed and the output torque, and the like), control characteristics of the ECU (the relationship between the accelerator opening degree and the throttle opening degree, and the like), control characteristics of the TCU (conditions for a change in the transmission gear ratio, the timing thereof, and the like), or control characteristics of the BCU (distribution of the braking force to each wheel, and the like), for example. Each of these models is stored beforehand into the model data storage unit 61.

The simulation unit 62 simulates a running state of a vehicle running on a predetermined running route, using part or all of the moving environment model stored in the model data storage unit 61, part or all of the driving mode model, and part or all of the vehicle model, and transmits running state data indicating the simulated running state to the test management unit 55. On the basis of the running state data generated by the simulation unit 62, the test management unit 55 then causes the power generation control unit 51, the electric discharge control unit 52, and the attitude control unit 54 so as to simulate the running state of the vehicle indicated by the running state data. Note that part or all of the vehicle information indicated by the vehicle model, for example, may be embodied when the components (actual machines) constituting the vehicle are incorporated into the fuel cell evaluation system 100.

The fuel cell evaluation system 100 of the above embodiment includes the oxygen-containing gas supply line connected to the oxygen intake port of the fuel cell S. However, the present invention is not limited to this. As illustrated in FIG. 3, the fuel cell evaluation system 100 of another embodiment does not include the oxygen-containing gas supply line, and the fuel cell S may directly take in ambient air from the oxygen intake port.

Further, in the fuel cell evaluation system 100 of the above embodiment, the fuel cell S serving as the test piece does not include the discharge tank, and the generated condensed water is stored in the discharge tank installed outside through the discharge line 3. However, the present invention is not limited to this. In another embodiment, the fuel cell S serving as a test piece may integrally include the discharge line 3 and the discharge tank in the housing.

Also, the inclination test device 4 of the above embodiment includes the two rotation axes 4x and 4y, and the mounting base 41 can be inclined individually with respect to each of the longitudinal direction and the lateral direction, but the invention is not limited to this. In another embodiment, the inclination test device 4 may include only the first rotation axis 4x or the second rotation axis 4y, and the mounting base 41 may be designed to be inclined only in the longitudinal direction or the lateral direction.

Also, in another embodiment, the control device 5 may execute a function as an evaluation unit that evaluates the influence of the condensed water generated by power generation on the power generating performance of the fuel cell S. For example, the evaluation unit may be designed to refer to the information stored in the test result storage unit 56, and evaluate the influence of the condensed water generated by power generation on the power generating performance of the fuel cell S, on the basis of the attitude of the fuel cell S, the amount of supply of the power-generating gas (specifically, hydrogen gas) in each attitude, and the amount of power generated by the fuel cell S in each attitude.

In yet another embodiment, the control device 5 may further execute a function as a result output unit that outputs the test result stored in the test result storage unit 56 to a display device such as a display, a record file, or the like.

In still another embodiment, some or all of the functions of the power generation control unit 51, the electric discharge control unit 52, the electric measurement unit 53, the attitude control unit 54, and the test management unit 55 may be executed by different computers, instead of being executed by the same computer.

Further, the fuel cell evaluation system 100 of the above embodiment evaluates a fuel cell to be mounted on a vehicle, but the present invention is not limited to this. The fuel cell evaluation system 100 of another embodiment may evaluate a fuel cell to be mounted on some other mobile object such as an aircraft, a railroad vehicle, or a vessel. For example, the inclination test device 4 may be designed to incline the mounting base 41 so as to change the attitude of the test piece S depending on a navigating state of an aircraft, a navigating state of a vessel, or a running state of a railroad vehicle. Here, a moving state means a running state in a case where the mobile object is a vehicle (a concept including an automobile, a two-wheeled vehicle, a railroad vehicle, or the like), and means a navigating state in a case where the mobile object is an aircraft, a vessel, or the like.

The fuel cell evaluation system 100 of another embodiment may further include a thermostatic chamber capable of adjusting its internal temperature. In this case, the test piece S (a unit cell of a fuel cell, a fuel cell stack, or a fuel cell system) and the inclination test device 4 may be placed inside the thermostatic chamber.

Moreover, the present invention is not limited to the above embodiments, and it goes without saying that various modifications can be made without departing from the scope of the invention.

### Industrial Applicability

According to the present invention described above, it is possible to perform fuel cell evaluation taking into consideration the influence of the condensed water generated by power generation.

### Reference Signs List

- 100: fuel cell evaluation system
- 11: hydrogen gas supply line
- 2: electric discharge unit
- 4: inclination test device
- 41: mounting base
- S: test piece (fuel cell)

## Claims

1. A fuel cell evaluation system that evaluates a test piece that is a fuel cell to be mounted on a mobile object or a portion of the fuel cell, the fuel cell evaluation system comprising:
a hydrogen gas supply line that supplies hydrogen gas to the test piece;
an electric discharge unit that controls an electric discharge load of the test piece; and
an inclination test device that has a mounting base on which the test piece is mounted, and inclines the mounting base so as to change an attitude of the test piece depending on a moving state of the mobile object.

2. The fuel cell evaluation system according to claim 1, wherein the moving state is one or more states selected from among a state in which the mobile object is accelerating, a state in which the mobile object is decelerating, a state in which the mobile object is moving at a constant speed, a state in which the mobile object is at a stop, and a state in which the mobile object is moving on an inclined surface.

3. The fuel cell evaluation system according to claim 1 or 2, wherein
the electric discharge unit changes the electric discharge load of the test piece depending on the moving state of the mobile object, and
the hydrogen gas supply line changes an amount of the hydrogen gas to be supplied to the test piece, depending on the moving state of the mobile object.

4. The fuel cell evaluation system according to any one of claims 1 to 3, wherein the hydrogen gas supply line is provided so as to extend through a vicinity of a fulcrum portion that is a fulcrum of inclination of the mounting base in the inclination test device, and a portion extending through the vicinity of the fulcrum portion among pipes constituting the line is formed with a pipe made from a stretchable material.

5. The fuel cell evaluation system according to any one of claims 1 to 4, further comprising a discharge line that is connected to a discharge port of the test piece, and discharges condensed water generated by power generation to outside,
wherein the discharge line is provided so as to extend through a vicinity of a fulcrum portion that is a fulcrum of inclination of the mounting base in the inclination test device, and a portion extending through the vicinity of the fulcrum portion among pipes constituting the line is formed with a pipe made from a stretchable material.

6. The fuel cell evaluation system according to any one of claims 1 to 5, further comprising a test result storage unit that stores an amount of supply of the hydrogen gas to be supplied to the test piece, an amount of power generated by the test piece, and an attitude of the test piece, the amount of supply of the hydrogen gas, the amount of power generated, and the attitude of the test piece being associated with one another.

7. The fuel cell evaluation system according to any one of claims 1 to 6, further comprising a storage unit that stores a moving state of the mobile object, the moving state having been acquired beforehand,
wherein the inclination test device inclines the mounting base, depending on the moving state stored in the storage unit.

8. The fuel cell evaluation system according to any one of claims 1 to 7, further comprising a simulation device that simulates a moving state of the mobile object, using at least one of a moving environment model that models a moving environment of the mobile object, a driving mode model that models a driving mode, or a mobile object model that models the mobile object,
wherein the inclination test device inclines the mounting base so as to reproduce the moving state of the mobile object simulated by the simulation device.

9. An inclination test device that tests a test piece that is a fuel cell to be mounted on a mobile object or a portion of the fuel cell, the inclination test device comprising:
a mounting base on which the test piece is mounted; and
an attitude control unit that inclines the mounting base so as to change an attitude of the test piece depending on a moving state of the mobile object.

10. A fuel cell evaluation method that is a method for evaluating a test piece that is a fuel cell to be mounted on a mobile object or a portion of the fuel cell, the method comprising:
supplying hydrogen gas to the test piece;
controlling an electric discharge load of the test piece; and
mounting the test piece on a mounting base, and inclining the mounting base so as to change an attitude of the test piece depending on a moving state of the mobile object.

11. A program for a fuel cell evaluation system that evaluates a test piece that is a fuel cell to be mounted on a mobile object or a portion of the fuel cell, the fuel cell evaluation system including: a hydrogen gas supply line that supplies hydrogen gas to the test piece; an electric discharge unit that controls an electric discharge load of the test piece; and an inclination test device including a mounting base on which the test piece is mounted,
the program causing a computer to execute a function as an attitude control unit that inclines the mounting base so as to change an attitude of the test piece depending on a moving state of the mobile object.
